# EUROPÄISCHE PATENTSCHRIFT

(11) **EP 3 787 237 B1**
(45) Veröffentlichungstag und Bekanntmachung des Hinweises auf die Patenterteilung: **19.04.2023**
(21) Anmeldenummer: 19194686.2
(22) Anmeldetag: 30.08.2019
(51) Int. Cl.: H04L 12/437, H04L 12/42

(54) **VERFAHREN ZUR DATENÜBERMITTLUNG IN EINEM REDUNDANT BETREIBBAREN KOMMUNIKATIONSNETZ UND KOPPEL-KOMMUNIKATIONSGERÄT**
METHOD FOR DATA TRANSMISSION IN A REDUNDANTLY OPERABLE COMMUNICATION NETWORK AND COUPLING COMMUNICATION DEVICE
PROCÉDÉ DE TRANSMISSION DE DONNÉES DANS UN RÉSEAU DE COMMUNICATION À FONCTIONNEMENT REDONDANT ET APPAREIL DE COMMUNICATION PAR COUPLAGE

(43) Veröffentlichungstag der Anmeldung: 03.03.2021
(73) Patentinhaber: Siemens Aktiengesellschaft, 80333 München (DE)
(72) Erfinder: Schlennert, Dieter, 90587 Obermichelbach (DE); Müller, Christian, 90530 Wendelstein (DE); Weichlein, Thomas, 91052 Erlangen (DE)
(74) Vertreter: Siemens Patent Attorneys

(56) Entgegenhaltungen:
- EP-A1- 2 854 345
- US-A1- 2009 022 168
- US-A1- 2009 109 841

## Beschreibung

Die vorliegende Erfindung betrifft ein Verfahren zur Datenübermittlung in einem redundant betreibbaren Kommunikationsnetz und ein Koppel-Kommunikationsgerät insbesondere für ein industrielles Automatisierungssystem.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Media Redundancy Protocol (MRP) ist im Standard IEC 62439 definiert und ermöglicht eine Kompensation einzelner Verbindungsausfälle in Netzen mit einfacher Ringtopologie bei stoßbehafteter redundanter Übertragung von Nachrichten. Stoßbehaftete Medienredundanzverfahren lassen sich grundsätzlich mit relativ geringem Aufwand realisieren, weisen aber gegenüber stoßfreien Redundanzverfahren, bei denen stets zwei oder mehrere redundante Pfade zeitgleich genutzt werden, grundsätzlich erhöhte Rekonfigurationszeiten auf. PROFINET (IEC 61158 Type 10) referenziert MRP als stoßbehaftetes Medienredundanzverfahren innerhalb eines Kommunikationsnetzes mit Ringtopologie.

In EP 1 062 787 B1 ist ein Ethernet-basiertes Kommunikationsnetz mit Redundanzeigenschaften beschrieben, bei dem ein an Linienenden des Kommunikationsnetzes angeschlossener Redundanz-Manager durch Test-Telegramme einen Zustand des Kommunikationsnetzes prüft. Bei einer Netzunterbrechung verbindet der Redundanzmanager die Linienenden und stellt auf diese Weise im Millisekundenbereich einen weiteren Netzbetrieb sicher.

Aus EP 1 476 987 B1 ist ein Ethernet-Kommunikationsnetz mit Redundanzeigenschaften bekannt, in dem mehrere Koppelgeräte und ein als Redundanzmanager betriebenes Koppelgerät in einer Ringtopologie miteinander verbunden sind. Zur Herstellung einer linienförmigen Topologie trennt der Redundanzmanager die Ringtopologie auf, falls von ihm ausgesendete Testtelegramme innerhalb eines vorgegebenen Zeitintervalls am jeweils anderen Port empfangen werden. Zumindest ein Koppelgerät wird als Redundanzmanager-Observer betrieben und ermittelt anhand eigener Testtelegramme Unterbrechungen innerhalb der Ringtopologie. Zur Herstellung einer linienförmigen Topologie trennt der Redundanzmanager-Observer die Ringtopologie auf, falls seine Testtelegramme innerhalb eines vorgegebenen Zeitinvervalls am jeweils anderen Port empfangen werden.

EP 1 476 988 B1 betrifft ein Ethernet-Kommunikationsnetz mit Redundanzeigenschaften, in dem mehrere Koppelgeräte und ein als Redundanzmanager betriebenes Koppelgerät in einer Ringtopologie miteinander verbunden sind. Zur Herstellung einer linienförmigen Topologie trennt der Redundanzmanager die Ringtopologie auf, falls von ihm ausgesendete Testtelegramme innerhalb eines vorgegebenen Zeitintervalls am jeweils anderen Port empfangen werden. Zumindest ein Koppelgerät wird als Redundanzmanager-Observer betrieben und wertet Telegramme aus, die es an seinem mit dem Redundanzmanager verbundenen Port empfängt. In Abhängigkeit von einem Auswertungsergebnis trennt der Redundanzmanager-Observer die Ringtopologie zur Herstellung einer linienförmigen Topologie auf und signalisiert einen Fehler, wenn ein in einem Testtelegramm angegebener Topologie-Zustand in Widerspruch zu einem durch den Redundanzmanager-Observer ermittelten Topologie-Zustand steht.

In EP 1 955 480 B1 ist ein Ethernet-Kommunikationsnetz mit Redundanzeigenschaften beschrieben, bei dem zumindest zwei Netzsegmente mit jeweils mehreren Ethernet-Switches über eine durch zumindest zwei Koppelkanäle gebildete redundante Verbindung miteinander verbunden sind. Durch ein Programmiergerät wird bei einer Konfigurierung der redundanten Verbindung zugeordneter Koppelgeräte ein logischer Name für die redundante Verbindung jeweils in einem Speicher der Koppelgeräte hinterlegt. Die Koppelgeräte ermitteln in einer Netzwerkanlaufphase durch Verteilen von Sondertelegrammen, die den logischen Namen der redundanten Verbindung umfassen, zur selben redundanten Verbindung gehörige Verbindungspartner. Anhand eines Ordnungskriteriums legen sie fest, welcher Koppelkanal in einem störungsfreien Betrieb aktiviert bzw. deaktiviert ist.

Aus EP 2 413 538 B1 ist ein Verfahren zur redundanten Kommunikation in einem Kommunikationssystem bekannt, bei dem das Kommunikationssystem ein erstes und ein zweites Kommunikationsnetz umfasst, die über zumindest einen Kopplungsknoten miteinander verbunden sind. Dabei wird eine Rückübertragung von Daten, die aus dem ersten Kommunikationsnetz stammen, aus dem zweiten Kommunikationsnetz zurück in das erste Kommunikationsnetz auf Grund einer vor Übertragung definierten Information verhindert.

EP 2 854 345 B1 betrifft ein Verfahren zur Nachrichtenübermittlung in einem redundant betreibbaren industriellen Kommunikationsnetz mit zumindest einem ersten und einem zweiten Teilnetz mit Ringtopologie, die über eine Teilnetz-Kopplung miteinander verbunden sind. Dabei wählen Koppel-Kommunikationsgeräte anhand eines ihnen jeweils zugeordneten Prioritätskennwerts untereinander ein Koppel-Kommunikationsgerät aus, dessen Kopplungssteuerungseinheit aktiviert wird. Die anderen Koppel-Kommunikationsgeräte deaktivieren dagegen ihre Kopplungssteuerungseinheit. Ein erstes Koppel-Kommunikationsgerät des ersten Teilnetzes und ein erstes Koppel-Kommunikationsgerät des zweiten Teilnetzes tauschen untereinander Test-Nachrichten zur Detektion einer Unterbrechung zwischen den beiden ersten Koppel-Kommunikationsgeräten aus, während ein zweites Koppel-Kommunikationsgerät des ersten Teilnetzes und ein zweites Koppel-Kommunikationsgerät des zweiten Teilnetzes untereinander Test-Nachrichten zur Detektion einer Unterbrechung zwischen den beiden zweiten Koppel-Kommunikationsgeräten austauschen.

Bei einer MRP-Interconnection entsprechend IEC 62439-2, Edition 2 zur Kopplung von MRP-Ringnetzen kann ein als MRP-Interconnection-Client genutzter Koppel-Switch gleichzeitig als Medien-Redundanz-Manager betrieben werden. Im ungünstigsten Fall muss bei einem Ausfall einer Haupt-MRP-Interconnection bzw. eines MRP-Interconnection-Client neben einem Umschalten auf eine Reserve-MRP-Interconnection auch eine relativ zeitaufwändige Auswahl eines Switches erfolgen, der als neuer Medien-Redundanz-Manager betrieben wird. Dies kann zu erheblich verlängerten Zeitdauern zur Rekonfiguration eines MRP-Ringes bzw. einer MRP-Interconnection führen. Im Rahmen einer die Rekonfiguration auslösenden störungsbedingten Topologie-Änderung löschen üblicherweise sämtliche Switche in einem MRP-Ringnetz ihre lokalen Quell-Adress-Tabellen (Forwarding Databases). Sinnvollerweise sollte die Auswahl des Switches, der als neuer Medien-Redundanz-Manager betrieben wird, vor einem Löschen der Quell-Adress-Tabellen abgeschlossen sein, da diese ansonsten eine jeweils aktuelle Netztopologie nicht richtig abbilden.

Der vorliegenden Erfindung liegt daher die Aufgabe zugrunde, ein Verfahren zur Datenübermittlung in einem redundant betreibbaren Kommunikationsnetz zu schaffen, das eine zuverlässige, fehlersichere Kopplung von zwei Teilnetzen mit Ringtopologie sowie verkürzte Rekonfigurationszeiten nach Störungen ermöglicht, und ein zur Durchführung des Verfahrens geeignetes Koppel-Kommunikationsgerät anzugeben.

Diese Aufgabe wird erfindungsgemäß durch ein Verfahren mit den in Anspruch 1 angegebenen Merkmalen sowie durch ein Koppel-Kommunikationsgerät mit den in Anspruch 13 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur Datenübermittlung in einem redundant betreibbaren Kommunikationsnetz umfasst das Kommunikationsnetz zumindest ein erstes und ein zweites Teilnetz. Beide Teilnetze umfassen jeweils innerhalb einer Ringtopologie miteinander verbundene Kommunikationsgeräte, die jeweils zumindest ein Koppelelement sowie einen ersten und einen zweiten Ring-Anschluss aufweisen, die durch das Koppelelement schaltbar miteinander verbindbar sind. Das Koppelelement kann beispielsweise mittels eines Backplane-Switches oder eines Matrix-Switches realisiert werden. Die beiden Teilnetze umfassen außerdem jeweils ein Kommunikationsgerät mit einer aktivierten Ring-Steuerungseinheit, die eine Unterbrechung innerhalb der jeweiligen Ringtopologie detektiert sowie eine Weiterleitung von Nutzdaten zwischen den Ring-Anschlüssen des jeweiligen Kommunikationsgeräts in Abhängigkeit von einer detektierten Unterbrechung steuert.

Vorzugsweise detektiert eine aktivierte Ring-Steuerungseinheit eine Unterbrechung innerhalb der jeweiligen Ringtopologie anhand erster Test-Datagramme, die durch das jeweilige bzw. als Redundanz-Manager betriebene Kommunikationsgerät versendet und in ungestörtem Ring-Zustand wieder empfangen werden. Entsprechend einer besonders bevorzugten Ausgestaltung der vorliegenden Erfindung werden Datagramme innerhalb des ersten und des zweiten Teilnetzes entsprechend Media Redundancy Protocol übermittelt.

Die beiden Teilnetze sind erfindungsgemäß über zwei Koppel-Strecken miteinander verbunden und umfassen jeweils zwei den an die Koppel-Strecken angeschlossene Koppel-Kommunikationsgeräte, die jeweils zusätzlich einen Koppel-Anschluss und eine Koppel-Steuerungseinheit aufweisen. Insbesondere kann der Koppel-Anschluss durch das Koppelelement mit den beiden Ring-Anschlüssen des jeweiligen Koppel-Kommunikationsgeräts schaltbar verbunden werden. Des Weiteren wird ein Koppel-Kommunikationsgerät ausgewählt, dessen Koppel-Steuerungseinheit aktiviert wird, während die Koppel-Steuerungseinheiten der anderen Koppel-Kommunikationsgeräte deaktiviert werden. Die Koppel-Strecke, an die das ausgewählte Koppel-Kommunikationsgerät angeschlossen ist, wird bis zu einem Störungseintritt als inaktive Reserve-Koppel-Strecke betrieben, während die andere Koppel-Strecke als aktive Haupt-Koppel-Strecke zur Übermittlung von Nutzdaten betrieben wird.

Erfindungsgemäß detektieren die an die Haupt-Koppel-Strecke angeschlossenen Koppel-Kommunikationsgeräte einen Störungseintritt an der Haupt-Koppel-Strecke und übermitteln Status-Datagramme an das ausgewählte Koppel-Kommunikationsgerät. Dabei umfassen die Status-Datagramme zusätzlich eine Konfigurationsinformation, ob das jeweilige an die Haupt-Koppel-Strecke angeschlossene Koppel-Kommunikationsgerät eine aktivierbare Ring-Steuerungseinheit umfasst.

Vorzugsweise tauschen die an die Haupt-Koppel-Strecke angeschlossenen Koppel-Kommunikationsgeräte untereinander zweite Test-Datagramme zur Detektion eines Störungseintritts an der Haupt-Koppel-Strecke aus. Entsprechend einer besonders bevorzugten Ausgestaltung der vorliegenden Erfindung wird das ausgewählte Koppel-Kommunikationsgeräte als Media Redundancy Interconnection Manager entsprechend IEC 62439-2 betrieben, und die an die Haupt-Koppel-Strecke angeschlossenen Koppel-Kommunikationsgeräte werden jeweils im Link Check Modus entsprechend IEC 62439-2 betrieben.

Das ausgewählte Koppel-Kommunikationsgerät aktiviert erfindungsgemäß bei einem durch ein Status-Datagramm signalisierten Störungseintritt an der Haupt-Koppel-Strecke die Reserve-Koppel-Strecke zur Übermittlung von Nutzdaten und sendet jeweils ein Topologieänderungs-Datagramm in die beiden Teilnetze. Durch ein solches Topologieänderungs-Datagramm werden die Kommunikationsgeräte zumindest mittelbar zu einem Löschen von gespeicherten Inhalten ihrer jeweiligen lokalen Quell-Adress-Tabelle bzw. Forwarding Database nach Ablauf einer vorgegebenen Zeitdauer veranlasst. Die vorgegebene Zeitdauer wird gegenüber einem Referenzwert verkürzt, wenn kein an die Haupt-Koppel-Strecke angeschlossenes Koppel-Kommunikationsgerät eine aktivierbare Ring-Steuerungseinheit umfasst. Auf diese Weise können die Konfigurationsinformationen, die von den an die Haupt-Koppel-Strecke angeschlossenen Koppel-Kommunikationsgeräten mittels der Status-Datagramme übermittelt werden, gezielt zur Adaption der vorgegebenen Zeitdauer genutzt werden. Bis auf wenige Ausnahmefälle können Ring- bzw. Interconnection-Rekonfigurationszeiten damit deutlich verkürzt werden.

Vorzugsweise wird die vorgegebene Zeitdauer durch das ausgewählte Koppel-Kommunikationsgerät im Topologieänderungs-Datagramm angegeben und in Abhängigkeit von der Konfigurationsinformation im jeweiligen Status-Datagramm verkürzt. Entsprechend einer weiteren bevorzugten Ausgestaltung der vorliegenden Erfindung steuert die aktivierte Kopplungssteuerungseinheit eine Weiterleitung von Nutzdaten vom bzw. zum Koppel-Anschluss des ausgewählten Koppel-Kommunikationsgeräts in Abhängigkeit von einem detektierten Störungseintritt an der Haupt-Koppel-Strecke. Insbesondere kann der Koppel-Anschluss damit zwischen einen Forwarding-Zustand und einem Blocked-Zustand umgeschaltet werden. Darüber hinaus wird durch ein Status-Datagramm vorteilhafterweise ein am jeweiligen Koppel-Anschluss auf- oder abgebauter Link angezeigt. Damit können Topologie-Änderungen an der Haupt-Koppel-Strecke zuverlässig und schnell nachverfolgt werden.

Entsprechend einer besonders bevorzugten Ausgestaltung der vorliegenden Erfindung sind die Status-Datagramme MRP_InLink-Change-Datenrahmen entsprechend IEC 62439-2, während die Topologieänderungs-Datagramme MRP_InTopologyChange-Datenrahmen entsprechend IEC 62439-2 sind. Damit kann die vorliegende Erfindung vollständig konform zu IEC 62439-2 implementiert werden. Darüber hinaus versenden die Kommunikationsgeräte mit aktivierter Ring-Steuerungseinheit bei Empfang des MRP_In-TopologyChange-Datenrahmens vorteilhafterweise einen MRP_TopologyChange-Datenrahmen entsprechend IEC 62439-2 an die Kommunikationsgeräte innerhalb ihres jeweiligen Teilnetzes. Dabei umfasst der MRP_TopologyChange-Datenrahmen eine Angabe der durch das ausgewählte Koppel-Kommunikationsgerät vorgegebenen Zeitdauer. Dementsprechend löschen die Kommunikationsgeräte bei Empfang des MRP_TopologyChange-Datenrahmens ihre jeweilige lokale Quell-Adress-Tabelle nach Ablauf der vorgegebenen Zeitdauer ab Empfang des MRP_TopologyChange-Datenrahmens. Auf diese Weise ist sichergestellt, dass eine Rekonfiguration von Ring und Interconnection bzw. Ring-Kopplung synchron zueinander erfolgt.

Das erste bzw. das zweite Teilnetz können jeweils mehrere Kommunikationsgeräte mit einer aktivierbaren Ring-Steuerungseinheit umfassen. In diesem Fall wählen die Kommunikationsgeräte mit einer aktivierbaren Ring-Steuerungseinheit anhand eines ihnen jeweils zugeordneten Prioritätskennwerts untereinander für das jeweilige Teilnetz ein Kommunikationsgerät aus, dessen Ring-Steuerungseinheit aktiviert wird, während die anderen Kommunikationsgeräte innerhalb des jeweiligen Teilnetzes ihre Ring-Steuerungseinheit deaktivieren. Somit ist sichergestellt, dass auch ein Ausfall eines Kommunikationsgeräts mit einer aktivierten Ring-Steuerungseinheit kompensiert werden kann. Analog dazu können die Koppel-Kommunikationsgeräte anhand eines ihnen jeweils zugeordneten Prioritätskennwerts untereinander ein Koppel-Kommunikationsgerät auswählen, dessen Kopplungssteuerungseinheit aktiviert wird, während die anderen Koppel-Kommunikationsgeräte ihre Kopplungssteuerungseinheit deaktivieren. Dementsprechend kann auch ein Ausfall des ausgewählten Koppel-Kommunikationsgeräts kompensiert werden, indem unter den verbleibenden Koppel-Kommunikationsgeräten ein Koppel-Kommunikationsgerät neu ausgewählt wird, dessen Kopplungssteuerungseinheit aktiviert wird.

Das erfindungsgemäße Koppel-Kommunikationsgerät weist zumindest ein Koppelelement sowie einen ersten und einen zweiten Ring-Anschluss und einen Koppel-Anschluss auf, die durch das Koppelelement schaltbar miteinander verbindbar sind. Außerdem weist das Koppel-Kommunikationsgerät eine aktivierbare Koppel-Steuerungseinheit auf, die dafür ausgestaltet und eingerichtet ist, eine Koppel-Strecke, an die das Koppel-Kommunikationsgerät angeschlossen ist, bis zu einem Störungseintritt als inaktive Reserve-Koppel-Strecke und eine andere Koppel-Strecke als aktive Haupt-Koppel-Strecke zur Übermittlung von Nutzdaten zu betreiben. Darüber hinaus ist das Koppel-Kommunikationsgerät dafür ausgestaltet und eingerichtet, als an die Haupt-Koppel-Strecke angeschlossenes Koppel-Kommunikationsgerät einen Störungseintritt an der Haupt-Koppel-Strecke zu detektieren und Status-Datagramme an ein ausgewähltes Koppel-Kommunikationsgerät mit aktivierter Koppel-Steuerungseinheit zu übermitteln. Dabei umfassen die Status-Datagramme zusätzlich eine Konfigurationsinformation, ob das Koppel-Kommunikationsgerät eine aktivierbare Ring-Steuerungseinheit umfasst.

Des Weiteren ist das erfindungsgemäße Koppel-Kommunikationsgerät dafür ausgestaltet und eingerichtet, als ausgewähltes Koppel-Kommunikationsgerät bei einem durch ein Status-Datagramm signalisierten Störungseintritt an der Haupt-Koppel-Strecke die Reserve-Koppel-Strecke zur Übermittlung von Nutzdaten zu aktivieren und jeweils ein Topologieänderungs-Datagramm zu senden, durch das weitere Kommunikationsgeräte zu einem Löschen ihrer jeweiligen lokalen Quell-Adress-Tabelle nach Ablauf einer vorgegebenen Zeitdauer veranlasst werden. Zusätzlich ist das Koppel-Kommunikationsgerät dafür ausgestaltet und eingerichtet, als ausgewähltes Koppel-Kommunikationsgerät die vorgegebene Zeitdauer gegenüber einem Referenzwert zu verkürzen, wenn kein an die Haupt-Koppel-Strecke angeschlossenes Koppel-Kommunikationsgerät eine aktivierbare Ring-Steuerungseinheit umfasst. Vorzugsweise umfasst das Koppel-Kommunikationsgerät einen Switch oder eine Bridge.

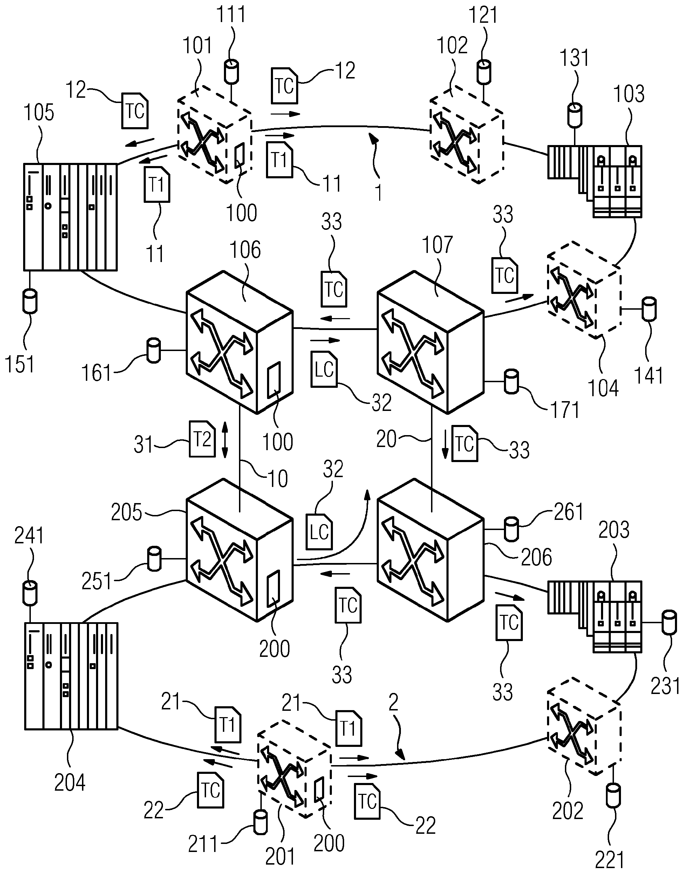

Die vorliegende Erfindung wird nachfolgend an einem Ausführungsbeispiel anhand der Zeichnung näher erläutert. Es zeigt die
- Figur: ein Kommunikationsnetz mit zwei Teilnetzen, die jeweils innerhalb einer Ringtopologie miteinander verbundene Kommunikationsgeräte umfassen, und mit vier Koppel-Kommunikationsgeräten für eine redundante Teilnetz-Kopplung.

Das in der Figur dargestellte industrielle Kommunikationsnetz umfasst zwei Teilnetze 1, 2, die über vier Koppel-Switches 106-107, 205-206 bzw. zwei Koppel-Strecken 10, 20 redundant miteinander gekoppelt sind. Innerhalb der beiden Teilnetze 1, 2, die jeweils mehrere innerhalb einer Ringtopologie miteinander verbundene Kommunikationsgeräte 101-107, 201-206 umfassen, werden Datarahmen entsprechend Media Redundancy Protocol (MRP) übermittelt. Die Kommunikationsgeräte 101-107, 201-206 weisen im vorliegenden Ausführungsbeispiel jeweils eine Switch- bzw. Bridge-Funktionalität sowie zumindest einen ersten und zweiten Ring-Anschluss und einen Backplane-Switch auf, durch den die Ring-Anschlüsse schaltbar miteinander verbindbar sind. Die an die beiden Koppel-Strecken 10, 20 angeschlossenen Koppel-Switches 106-107, 205-206 weisen zusätzlich jeweils einen Koppel-Anschluss und eine Koppel-Steuerungseinheit für eine redundante Teilnetz-Kopplung auf. Dabei kann der Koppel-Anschluss durch den Backplane-Switch mit den beiden Ring-Anschlüssen des jeweiligen Koppel-Switches 106-107, 205-206 schaltbar verbunden werden.

Im ersten und zweiten Teilnetz 1, 2 wird jeweils ein Kommunikationsgerät 101, 201 als Medien-Redundanz-Manager betrieben. Hierzu umfassen die als Medien-Redundanz-Manager betriebenen Kommunikationsgeräte 101, 201 jeweils eine aktivierte Ring-Steuerungseinheit 100, 200. Diese Ring-Steuerungseinheit 100, 200 detektiert eine Unterbrechung innerhalb der jeweiligen Ringtopologie anhand durch das jeweilige Kommunikationsgerät 101, 201 versendeter und wieder empfangener erster Test-Datenrahmen 11, 21. Darüber hinaus steuert die Ring-Steuerungseinheit 100, 200 eine Weiterleitung von Datenrahmen mit Nutzdaten zwischen den Ring-Anschlüssen des jeweiligen Kommunikationsgeräts 101, 201 in Abhängigkeit von einer detektierten Unterbrechung.

Grundsätzlich können auch die übrigen Kommunikationsgeräte 102-107, 202-206 als Medien-Redundanz-Manager betrieben werden, sofern sie eine aktivierbare Ring-Steuerungseinheit aufweisen. Haben mehrere Kommunikationsgeräte innerhalb einer Ringtopologie eine entsprechende Funktionalität, so wird unter diesen Kommunikationsgeräten in einem Auswahlverfahren bestimmt, welches Kommunikationsgerät als Medien-Redundanz-Manager betrieben wird, bzw. welches Kommunikationsgerät seine Ring-Steuerungseinheit 100, 200 aktiviert. Beispielsweise können die Kommunikationsgeräte mit einer aktivierbaren Ring-Steuerungseinheit anhand eines ihnen jeweils zugeordneten Prioritätskennwerts untereinander für das jeweilige Teilnetz ein Kommunikationsgerät auswählen, dessen Ring-Steuerungseinheit aktiviert wird, während die anderen Kommunikationsgeräte innerhalb des jeweiligen Teilnetzes ihre Ring-Steuerungseinheit deaktivieren.

Die Kommunikationsgeräte 101-106, 201-206 können insbesondere einem industriellen Automatisierungsgerät, wie einer speicherprogrammierbaren Steuerung oder einem Feldgerät, zugeordnet oder in ein industrielles Automatisierungsgerät integriert sein. Entsprechend der Figur sind im vorliegenden Ausführungsbeispiel die Kommunikationsgeräte 103, 105, 203, 204 in eine speicherprogrammierbare Steuerung bzw. in ein dezentrales Peripheriegerät integriert.

Im vorliegenden Ausführungsbeispiel wird genau ein Koppel-Switch 107 ausgewählt, dessen Koppel-Steuerungseinheit aktiviert wird, während die Koppel-Steuerungseinheiten der anderen Koppel-Switches 106, 205-206 deaktiviert werden. Grundsätzlich können die Koppel-Switches 106-107, 205-206 anhand eines ihnen jeweils zugeordneten Prioritätskennwerts untereinander einen Koppel-Switch auswählen, dessen Kopplungssteuerungseinheit aktiviert wird, während die anderen Koppel-Switches ihre Kopplungssteuerungseinheit selbständig deaktivieren.

Die Koppel-Strecke 20, an die der ausgewählte Koppel-Switch 107 angeschlossen ist, wird bis zu einem Störungseintritt als inaktive Reserve-Koppel-Strecke betrieben, während die andere Koppel-Strecke 10 als aktive Haupt-Koppel-Strecke zur Übermittlung von Nutzdaten betrieben wird. Der ausgewählte Koppel-Switch 107 wird als Media Redundancy Interconnection Manager (MIM) betrieben, während die an die Haupt-Koppel-Strecke 10 angeschlossenen Koppel-Switches 106, 205 im vorliegenden Ausführungsbeispiel jeweils als Media Redundancy Interconnection Clients (MIC) im Link Check Modus entsprechend IEC 62439-2, Edition 2 betrieben werden.

Die an die Haupt-Koppel-Strecke 10 angeschlossenen Koppel-Switches 106, 205 detektieren einen Störungseintritt an der Haupt-Koppel-Strecke 10 und übermitteln MRP_InLinkChange-Datenrahmen 32 an den ausgewählten Koppel-Switch 107. Zur Detektion eines Störungseintritts an der Haupt-Koppel-Strecke 10 tauschen die an die Haupt-Koppel-Strecke 10 angeschlossenen Koppel-Switches 106, 205 untereinander zweite Test-Datenrahmen 31 aus. Durch die MRP_InLinkChange-Datenrahmen 32 werden am jeweiligen Koppel-Anschluss auf- oder abgebaute Links (Link Up, Link Down) angezeigt. Auch bei einem Booten eines an die Haupt-Koppel-Strecke 10 angeschlossenen Koppel-Switches 106, 205 wird beispielsweise ein MRP_InLinkChange-Datenrahmen 32 gesendet. Darüber hinaus umfassen die MRP _InLink-Change-Datenrahmen 32 zusätzlich eine Konfigurationsinformation, ob der jeweilige an die Haupt-Koppel-Strecke 10 angeschlossene Koppel-Switch 106, 205 eine aktivierbare Ring-Steuerungseinheit 100, 200 umfasst. Vorzugsweise wird diese Konfigurationsinformation als Projektierungsbit in die MRP_InLinkChange-Datenrahmen 32 eingefügt.

Der ausgewählte Koppel-Switch 107 aktiviert bei einem durch einen MRP_InLinkChange-Datenrahmen 32 signalisierten Störungseintritt an der Haupt-Koppel-Strecke 10 die Reserve-Koppel-Strecke 20 zur Übermittlung von Nutzdaten und sendet jeweils einen MRP_InTopologyChange-Datenrahmen 33 in die beiden Teilnetze 1, 2. Durch den MRP_InTopologyChange-Datenrahmen 33 werden die Kommunikationsgeräte 101-107, 201-206 mittelbar zu einem Löschen von gespeicherten Inhalten ihrer jeweiligen lokalen Quell-Adress-Tabelle bzw. Forwarding Database 111, 121, 131, 141, 151, 161, 171, 211, 221, 231, 241, 251, 261, die mitunter auch als Filtering Database bezeichnet wird, nach Ablauf einer vorgegebenen Zeitdauer veranlasst. Dieses Löschen umfasst vorzugsweise nur die Ring- und ggf. Koppel-Anschlüsse der Kommunikationsgeräte 101-107, 201-206. Die vorgegebene Zeitdauer wird gegenüber einem Referenzwert verkürzt, wenn kein an die Haupt-Koppel-Strecke 10 angeschlossener Koppel-Switch 106, 205 eine aktivierbare Ring-Steuerungseinheit 100, 200 umfasst.

Vorzugsweise wird die vorgegebene Zeitdauer durch den ausgewählten Koppel-Switch 107 im MRP_InTopologyChange-Datenrahmen 33 angegeben und in Abhängigkeit von der Konfigurationsinformation im jeweiligen MRP_InLinkChange-Datenrahmen 32 verkürzt. Darüber hinaus steuert die aktivierte Kopplungssteuerungseinheit des ausgewählten Koppel-Switches 107 im vorliegenden Ausführungsbeispiel eine Weiterleitung von Nutzdaten bzw. zum Koppel-Anschluss des ausgewählten Koppel-Switches 107 in Abhängigkeit von einem detektierten Störungseintritt an der Haupt-Koppel-Strecke 10.

Die als Medien-Redundanz-Manager betriebenen Kommunikationsgeräte 101, 201 versenden bei Empfang eines MRP_InTopology-Change-Datenrahmens 33 einen MRP_TopologyChange-Datenrahmen 12 an die Kommunikationsgeräte 102-107, 202-206 innerhalb ihres jeweiligen Teilnetzes 1, 2. Dabei umfasst der MRP_TopologyChange-Datenrahmen 12 eine Angabe der durch den ausgewählten Koppel-Switch 107 vorgegebenen Zeitdauer. Bei Empfang eines solchen MRP_TopologyChange-Datenrahmens 12 löschen die Kommunikationsgeräte 101-107, 201-206 ihre jeweilige lokale Quell-Adress-Tabelle 111, 121, 131, 141, 151, 161, 171, 211, 221, 231, 241, 251, 261 nach Ablauf der vorgegebenen Zeitdauer ab Empfang des MRP_TopologyChange-Datenrahmens 12. Durch beschriebene Weiterleitung des MRP_InTopologieChange-Datenrahmens 12 und ein hierdurch ausgelöstes Versenden des MRP_TopologieChange-Datenrahmens wird insbesondere eine im wesentlichen synchrone Umkonfigurierung in den über die redundante Teilnetz-Kopplung miteinander verbundenen Teilnetzen 1, 2 erzielt.

Der MRP_InTopologyChange-Datenrahmen 33 und der MRP_Topology-Change-Datenrahmen 12 können beispielsweise innerhalb eines definierten Zeitintervalls MRP_IN_TOPchgT bzw. MRP_TOPchgT bis zu einer definierten maximalen Wiederholungszahl MRP_IN_-TOPNRmax bzw. MRP_TOPNRmax wiederholt gesendet werden. Durch jede Wiederholung wird in den Kommunikationsgeräten 101-107, 201-206 jeweils ein Timer zum Löschen ihrer jeweiligen lokalen Quell-Adress-Tabelle 111, 121, 131, 141, 151, 161, 171, 211, 221, 231, 241, 251, 261 zurückgesetzt, so dass die Kommunikationsgeräte ihre Quell-Adress-Tabellen zumindest während des jeweiligen definierten Zeitintervalls MRP_IN_TOPchgT bzw. MRP_TOPchgT nicht löschen. Obige vorgegebene Zeitdauer, nach deren Ablauf ein Löschen der Quell-Adress-Tabellen erfolgt, entspricht maximal also einem Produkt aus dem definierten Zeitintervall MRP_IN_TOPchgT=MRP_TOPchgT und der definierten maximalen Wiederholungszahl MRP_IN_TOPNRmax=MRP_-TOPNRmax.

Grundsätzlich ist es möglich, dass ein oder beide an die Haupt-Koppel-Strecke 10 angeschlossenen Koppel-Switches 106, 205 zugleich als Primary MIC und als Medien-Redundanz-Manager projektiert sind. Fällt ein Primary MIC 106, 205 mit Rolle als Medien-Redundanz-Manager aus, so startet der ausgewählte Koppel-Switch 107 als MIM einen Rekonfigurationsvorgang. Da ein neuer Medien-Redundanz-Manager erst dann in einem MRP-Ring aktiv wird, wenn die ersten Test-Datenrahmen 11 bzw. 21 des ausgefallenen Medien-Redundanz-Managers ausbleiben, muss der MIM 107 die MRP_InTopologyChange-Datenrahmen 33 solange senden, bis ein neuer Medien-Redundanz-Manager aktiv ist, längstens also bis zum Ablauf obiger maximaler vorgegebener Zeitdauer.

Der MIM 107 wertet also in MRP_InTopologyChange-Datenrahmen 32 angegebene Projektierungsinformationen der Primary MIC 106, 205 aus und setzt Vorgaben für das definierte Zeitintervall MRP_IN_TOPchgT und für die definierte maximale Wiederholungszahl MRP_IN_TOPNRmax beispielsweise adaptiv entsprechend nachstehender Tabelle um, wobei MRM für Medien-Redundanz-Manager steht.

| MRM aktiv | MRP_IN_TOPchgT | MRP_IN_TOPNRmax |
|---|---|---|
| NEIN | 10 | 3 |
| JA | 20 | 4 |

Falls also kein Primary MIC 106, 205 eine Rolle als Medien-Redundanz-Manager hat, ergeben sich bereits aus diesem Beispiel deutlich verkürzte Rekonfigurationszeiten.

## Patentansprüche

1. Verfahren zur Datenübermittlung in einem redundant betreibbaren Kommunikationsnetz, bei dem
- das Kommunikationsnetz zumindest ein erstes und ein zweites Teilnetz (1, 2) umfasst, die jeweils innerhalb einer Ringtopologie miteinander verbundene Kommunikationsgeräte (101-107, 201-206) umfassen, die jeweils zumindest ein Koppelelement sowie einen ersten und einen zweiten Ring-Anschluss aufweisen, die durch das Koppelelement schaltbar miteinander verbindbar sind,
- die beiden Teilnetze jeweils ein Kommunikationsgerät (101, 201) mit einer aktivierten Ring-Steuerungseinheit (100, 200) umfassen, die eine Unterbrechung innerhalb der jeweiligen Ringtopologie detektiert sowie eine Weiterleitung von Nutzdaten zwischen den Ring-Anschlüssen des jeweiligen Kommunikationsgeräts in Abhängigkeit von einer detektierten Unterbrechung steuert,
- die beiden Teilnetze über zwei Koppel-Strecken (10, 20) miteinander verbunden sind und jeweils zwei den an die Koppel-Strecken angeschlossene Koppel-Kommunikationsgeräte (106-107, 205-206) umfassen, die jeweils zusätzlich einen Koppel-Anschluss und eine Koppel-Steuerungseinheit aufweisen,
- ein Koppel-Kommunikationsgerät (107) ausgewählt wird, dessen Koppel-Steuerungseinheit aktiviert wird, während die Koppel-Steuerungseinheiten der anderen Koppel-Kommunikationsgeräte deaktiviert werden,
- die Koppel-Strecke (20), an die das ausgewählte Koppel-Kommunikationsgerät angeschlossen ist, bis zu einem Störungseintritt als inaktive Reserve-Koppel-Strecke betrieben wird, während die andere Koppel-Strecke (10) als aktive Haupt-Koppel-Strecke zur Übermittlung von Nutzdaten betrieben wird,
**dadurch gekennzeichnet, dass**
- die an die Haupt-Koppel-Strecke angeschlossenen Koppel-Kommunikationsgeräte (106, 205) einen Störungseintritt an der Haupt-Koppel-Strecke detektieren und Status-Datagramme (32) an das ausgewählte Koppel-Kommunikationsgerät übermitteln, wobei die Status-Datagramme zusätzlich eine Konfigurationsinformation umfassen, ob das jeweilige an die Haupt-Koppel-Strecke angeschlossene Koppel-Kommunikationsgerät eine aktivierbare Ring-Steuerungseinheit umfasst,
- das ausgewählte Koppel-Kommunikationsgerät bei einem durch ein Status-Datagramm signalisierten Störungseintritt an der Haupt-Koppel-Strecke die Reserve-Koppel-Strecke zur Übermittlung von Nutzdaten aktiviert und jeweils ein Topologieänderungs-Datagramm (33) in die beiden Teilnetze sendet, durch das die Kommunikationsgeräte zu einem Löschen ihrer jeweiligen lokalen Quell-Adress-Tabelle (111, 121, ..., 171, 211, 221, ..., 271) nach Ablauf einer vorgegebenen Zeitdauer veranlasst werden,
- die vorgegebene Zeitdauer gegenüber einem Referenzwert verkürzt wird, wenn kein an die Haupt-Koppel-Strecke angeschlossenes Koppel-Kommunikationsgerät eine aktivierbare Ring-Steuerungseinheit umfasst.

2. Verfahren nach Anspruch 1,
bei dem die aktivierte Kopplungssteuerungseinheit eine Weiterleitung von Nutzdaten vom und/oder zum Koppel-Anschluss des ausgewählten Koppel-Kommunikationsgeräts in Abhängigkeit von einem detektierten Störungseintritt an der Haupt-Koppel-Strecke steuert.

3. Verfahren nach einem der Ansprüche 1 oder 2,
bei dem durch ein Status-Datagramm ein am jeweiligen Koppel-Anschluss auf- oder abgebauter Link angezeigt wird.

4. Verfahren nach einem der Ansprüche 1 bis 3,
bei dem die vorgegebene Zeitdauer durch das ausgewählte Koppel-Kommunikationsgerät im Topologieänderungs-Datagramm angegeben und in Abhängigkeit von der Konfigurationsinformation im jeweiligen Status-Datagramm verkürzt wird.

5. Verfahren nach einem der Patentansprüche 1 bis 4,
bei dem die Status-Datagramme (32) MRP_InLinkChange-Datenrahmen entsprechend IEC 62439-2 sind und bei dem die Topologieänderungs-Datagramme (33) MRP_InTopologyChange-Datenrahmen entsprechend IEC 62439-2 sind.

6. Verfahren nach Patentanspruch 5,
bei dem die Kommunikationsgeräte (101, 201) mit aktivierter Ring-Steuerungseinheit (100, 200) bei Empfang des MRP_In-TopologyChange-Datenrahmens (33) einen MRP_TopologyChange-Datenrahmen (12, 22) entsprechend IEC 62439-2 an die Kommunikationsgeräte (101-107, 201-206) innerhalb ihres jeweiligen Teilnetzes (1, 2) versenden, bei dem der MRP_TopologyChange-Datenrahmen eine Angabe der durch das ausgewählte Koppel-Kommunikationsgerät ()107 vorgegebenen Zeitdauer umfasst und bei dem die Kommunikationsgeräte bei Empfang des MRP_TopologyChange-Datenrahmens ihre jeweilige lokale Quell-Adress-Tabelle (111, 121, ..., 171, 211, 221, ..., 271) nach Ablauf der vorgegebenen Zeitdauer ab Empfang des MRP_TopologyChange-Datenrahmens löschen.

7. Verfahren nach einem der Ansprüche 1 bis 6,
bei dem das erste und/oder das zweite Teilnetz (1, 2) jeweils mehrere Kommunikationsgeräte (101, 106; 201, 205) mit einer aktivierbaren Ring-Steuerungseinheit (100, 200) umfassen und bei dem die Kommunikationsgeräte mit einer aktivierbaren Ring-Steuerungseinheit anhand eines ihnen jeweils zugeordneten Prioritätskennwerts untereinander für das jeweilige Teilnetz ein Kommunikationsgerät auswählen, dessen Ring-Steuerungseinheit aktiviert wird, während die anderen Kommunikationsgeräte innerhalb des jeweiligen Teilnetzes ihre Ring-Steuerungseinheit deaktivieren.

8. Verfahren nach einem der Ansprüche 1 bis 7,
bei dem eine aktivierte Ring-Steuerungseinheit (100, 200) eine Unterbrechung innerhalb der jeweiligen Ringtopologie anhand durch das jeweilige Kommunikationsgerät (101, 201) versendeter und wieder empfangener erster Test-Datagramme (11, 21) detektiert.

9. Verfahren nach Anspruch 8,
bei dem Datagramme innerhalb des ersten und des zweiten Teilnetzes entsprechend Media Redundancy Protocol übermittelt werden.

10. Verfahren nach einem der Ansprüche 1 bis 9,
bei dem die an die Haupt-Koppel-Strecke (10) angeschlossenen Koppel-Kommunikationsgeräte (106, 205) untereinander zweite Test-Datagramme (31) zur Detektion eines Störungseintritts an der Haupt-Koppel-Strecke austauschen.

11. Verfahren nach einem der Ansprüche 1 bis 10,
bei dem das ausgewählte Koppel-Kommunikationsgeräte als Media Redundancy Interconnection Manager entsprechend IEC 62439-2 betrieben wird und bei dem die an die Haupt-Koppel-Strecke angeschlossenen Koppel-Kommunikationsgeräte jeweils im Link Check Modus entsprechend IEC 62439-2 betrieben werden.

12. Verfahren nach einem der Ansprüche 1 bis 11,
bei dem die Koppel-Kommunikationsgeräte anhand eines ihnen jeweils zugeordneten Prioritätskennwerts untereinander ein Koppel-Kommunikationsgerät auswählen, dessen Kopplungssteuerungseinheit aktiviert wird, während die anderen Koppel-Kommunikationsgeräte ihre Kopplungssteuerungseinheit deaktivieren.

13. Koppel-Kommunikationsgerät mit
- zumindest einem Koppelelement sowie einem ersten und einem zweiten Ring-Anschluss und einem Koppel-Anschluss, die durch das Koppelelement schaltbar miteinander verbindbar sind,
- einer aktivierbaren Koppel-Steuerungseinheit, die dafür ausgestaltet und eingerichtet ist, eine Koppel-Strecke, an die das Koppel-Kommunikationsgerät angeschlossen ist, bis zu einem Störungseintritt als inaktive Reserve-Koppel-Strecke und eine andere Koppel-Strecke als aktive Haupt-Koppel-Strecke zur Übermittlung von Nutzdaten zu betreiben,
- das Koppel-Kommunikationsgerät **dadurch gekennzeichnet, dass** es dafür ausgestaltet und eingerichtet ist, als an die Haupt-Koppel-Strecke angeschlossenes Koppel-Kommunikationsgerät einen Störungseintritt an der Haupt-Koppel-Strecke zu detektieren und Status-Datagramme an ein ausgewähltes Koppel-Kommunikationsgerät mit aktivierter Koppel-Steuerungseinheit zu übermitteln, wobei die Status-Datagramme zusätzlich eine Konfigurationsinformation umfassen, ob das Koppel-Kommunikationsgerät eine aktivierbare Ring-Steuerungseinheit umfasst,
- dass es dafür ausgestaltet und eingerichtet ist, als ausgewähltes Koppel-Kommunikationsgerät bei einem durch ein Status-Datagramm signalisierten Störungseintritt an der Haupt-Koppel-Strecke die Reserve-Koppel-Strecke zur Übermittlung von Nutzdaten zu aktivieren und jeweils ein Topologieänderungs-Datagramm zu senden, durch das weitere Kommunikationsgeräte zu einem Löschen ihrer jeweiligen lokalen Quell-Adress-Tabelle nach Ablauf einer vorgegebenen Zeitdauer veranlasst werden,
- dass es dafür ausgestaltet und eingerichtet ist, als ausgewähltes Koppel-Kommunikationsgerät die vorgegebene Zeitdauer gegenüber einem Referenzwert zu verkürzen, wenn kein an die Haupt-Koppel-Strecke angeschlossenes Koppel-Kommunikationsgerät eine aktivierbare Ring-Steuerungseinheit umfasst.

14. Koppel-Kommunikationsgerät nach Anspruch 13,
bei dem das Koppel-Kommunikationsgerät einen Switch oder eine Bridge umfasst.

## Claims

1. Method for data transmission in a redundantly operable communication network, in which
- the communication network comprises at least a first and a second subnetwork (1, 2), each of which comprise communication devices (101-107, 201-206) that are connected to one another within a ring topology and each have at least one coupling element and also a first and a second ring connection, which are switchably connectable to one another by the coupling element,
- the two subnetworks each comprise a communication device (101, 201) having an activated ring control unit (100, 200) that detects an interruption within the respective ring topology and also controls forwarding of payload data between the ring connections of the respective communication device on the basis of a detected interruption,
- the two subnetworks are connected to one another by way of two coupling paths (10, 20) and each comprise two coupling communication devices (106-107, 205-206), connected to the coupling paths, that each additionally have a coupling connection and a coupling control unit,
- one coupling communication device (107) is selected, the coupling control unit of which is activated, while the coupling control units of the other coupling communication devices are deactivated,
- the coupling path (20) to which the selected coupling communication device is connected is operated as an inactive reserve coupling path until a fault occurs, while the other coupling path (10) is operated as the active main coupling path for transmitting payload data,
**characterized in that**
- the coupling communication devices (106, 205) connected to the main coupling path detect the occurrence of a fault on the main coupling path and transmit status datagrams (32) to the selected coupling communication device, the status datagrams additionally comprising configuration information regarding whether the respective coupling communication device connected to the main coupling path comprises an activable ring control unit,
- in the event of a fault occurring on the main coupling path, which is signalled by a status datagram, the selected coupling communication device activates the reserve coupling path for transmitting payload data and transmits a topology change datagram (33) to each of the two subnetworks, which topology change datagram prompts the communication devices to erase their respective local source address table (111, 121, ..., 171, 211, 221, ..., 271) after a predefined period of time has elapsed,
- the predefined period of time is shortened compared to a reference value if no coupling communication device connected to the main coupling path comprises an activable ring control unit.

2. Method according to Claim 1,
in which the activated coupling control unit controls forwarding of payload data from and/or to the coupling connection of the selected coupling communication device on the basis of a detected fault occurrence on the main coupling path.

3. Method according to either of Claims 1 and 2,
in which a status datagram displays a link that has been set up or cleared at the respective coupling connection.

4. Method according to one of Claims 1 to 3,
in which the predefined period of time is indicated by the selected coupling communication device in the topology change datagram and shortened on the basis of the configuration information in the respective status datagram.

5. Method according to one of Patent Claims 1 to 4,
in which the status datagrams (32) are MRP_InLinkChange data frames according to IEC 62439-2 and in which the topology change datagrams (33) are MRP_InTopologyChange data frames according to IEC 62439-2.

6. Method according to Patent Claim 5,
in which the communication devices (101, 201) having an activated ring control unit (100, 200) send an MRP_TopologyChange data frame (12, 22) according to IEC 62439-2 to the communication devices (101-107, 201-206) within their respective subnetwork (1, 2) on receiving the MRP_InTopologyChange data frame (33), in which the MRP_TopologyChange data frame comprises an indication of the period of time predefined by the selected coupling communication device (107) and in which on receiving the MRP_TopologyChange data frame the communication devices erase their respective local source address table (111, 121, ..., 171, 211, 221, ..., 271) after the predefined period of time has elapsed from reception of the MRP_TopologyChange data frame.

7. Method according to one of Claims 1 to 6,
in which the first and/or the second subnetwork (1, 2) each comprise multiple communication devices (101, 106; 201, 205) having an activable ring control unit (100, 200) and in which the communication devices having an activable ring control unit take a priority characteristic associated with each of them as a basis for selecting one communication device from among one another for the respective subnetwork, the ring control unit of which communication device is activated, while the other communication devices within the respective subnetwork deactivate their ring control unit.

8. Method according to one of Claims 1 to 7,
in which an activated ring control unit (100, 200) detects an interruption within the respective ring topology on the basis of first test datagrams (11, 21) that are sent and received again by the respective communication device (101, 201).

9. Method according to Claim 8,
in which datagrams within the first and the second subnetwork are transmitted according to the Media Redundancy Protocol.

10. Method according to one of Claims 1 to 9,
in which the coupling communication devices (106, 205) connected to the main coupling path (10) interchange second test datagrams (31) among one another for the purpose of detecting the occurrence of a fault on the main coupling path.

11. Method according to one of Claims 1 to 10,
in which the selected coupling communication device is operated as a media redundancy interconnection manager according to IEC 62439-2 and in which the coupling communication devices connected to the main coupling path are each operated in the link check mode according to IEC 62439-2.

12. Method according to one of Claims 1 to 11,
in which the coupling communication devices take a priority characteristic associated with each of them as a basis for selecting one coupling communication device from among one another, the coupling control unit of which is activated, while the other coupling communication devices deactivate their coupling control unit.

13. Coupling communication device having
- at least one coupling element and also a first and a second ring connection and a coupling connection, which are switchably connectable to one another by the coupling element,
- an activable coupling control unit, which is configured and designed to operate a coupling path to which the coupling communication device is connected as an inactive reserve coupling path until a fault occurs and another coupling path as the active main coupling path for transmitting payload data,
- the coupling communication device being **characterized in that** it is configured and designed, as coupling communication device connected to the main coupling path, to detect the occurrence of a fault on the main coupling path and to transmit status datagrams to a selected coupling communication device having an activated coupling control unit, the status datagrams additionally comprising configuration information regarding whether the coupling communication device comprises an activable ring control unit,
- **in that** it is configured and designed, as selected coupling communication device, so as in the event of a fault occurring on the main coupling path, which is signalled by a status datagram, to activate the reserve coupling path for transmitting payload data and to transmit a respective topology change datagram that prompts further communication devices to erase their respective local source address table after a predefined period of time has elapsed,
- and **in that** it is configured and designed, as selected coupling communication device, to shorten the predefined period of time compared to a reference value if no coupling communication device connected to the main coupling path comprises an activable ring control unit.

14. Coupling communication device according to Claim 13,
in which the coupling communication device comprises a switch or a bridge.

## Revendications

1. Procédé de transmission de données dans un réseau de communication pouvant fonctionner de manière redondante, dans lequel
- le réseau de communication comprend au moins un premier et un deuxième réseaux (1, 2) partiels, qui comprennent chacun, au sein d'une topologie annulaire, des appareils (101-107, 201-206) de communication reliés entre eux, qui ont chacun au moins un élément de couplage ainsi qu'une première et une deuxième bornes d'anneau, qui peuvent être reliées entre elles de manière commutable par l'élément de couplage,
- les deux réseaux partiels comprennent chacun un appareil (101, 201) de communication ayant une unité (100, 200) de commande d'anneau activée, qui détecte une interruption au sein de la topologie annulaire respective, et qui commande, en fonction d'une interruption détectée, un acheminement de données utiles entre les bornes d'anneau de l'appareil de communication respectif,
- les deux réseaux partiels sont reliés l'un à l'autre par deux chemins (10, 20) de couplage et comprennent chacun deux appareils (106-107, 205-206) de communication de couplage, qui sont raccordés aux chemins de couplage, et qui ont chacun supplémentairement une borne de couplage et une unité de commande de couplage,
- on choisit un appareil (107) de communication de couplage, dont on active l'unité de commande de couplage, tandis que l'on désactive les unités de commande de couplage des autres appareils de communication de couplage,
- on fait fonctionner les chemins (20) de couplage auxquels l'appareil de communication de couplage choisi est raccordé, jusqu'à une apparition d'une perturbation, comme chemin de couplage de réserve inactif, tandis que l'on fait fonctionner l'autre chemin (10) de couplage comme chemin de couplage principal actif pour la transmission de données utiles,
**caractérisé en ce que**
- les appareils (106, 205) de communication de couplage, raccordés au chemin de couplage principal, détectent l'apparition d'une perturbation sur le chemin de couplage principal et transmettent des datagrammes (32) de statut à l'appareil de communication de couplage choisi, les datagrammes de statut comprenant en plus une information de configuration sur le point de savoir, si l'appareil de communication de couplage raccordé au chemin de couplage principal comprend une unité de commande d'anneau pouvant être activée,
- l'appareil de communication de couplage choisi active le chemin de couplage de réserve pour la transmission de données utiles, s'il survient, sur le chemin de couplage principal, une perturbation signalée par un datagramme de statut, et envoie respectivement un datagramme (33) de modification de la topologie dans les deux réseaux partiels, par lequel, il est fait que, après expiration d'une durée donnée à l'avance, les appareils de communication provoquent un effacement de leurs tables (111, 121, ..., 171, 211, 221, ..., 271) d'adresse source locale respective,
- on écourte la durée donnée à l'avance, par rapport à une valeur de référence, si aucun appareil de communication de couplage, raccordé au chemin de couplage principal, ne comprend une unité de commande d'anneau pouvant être activée.

2. Procédé suivant la revendication 1,
dans lequel l'unité de commande de couplage activée commande, en fonction de la détection de l'apparition d'une perturbation sur le chemin de couplage principal, un acheminement de données utiles de et/ou à la borne de couplage de l'appareil de communication de couplage choisi.

3. Procédé suivant l'une des revendications 1 ou 2,
dans lequel on affiche, par un datagramme de statut, un lien à établir ou à supprimer sur une borne de couplage respective.

4. Procédé suivant l'une des revendications 1 à 3,
dans lequel on indique, dans le datagramme de modification de la topologie, par l'appareil de communication de couplage choisi, la durée donnée à l'avance, et on l'écourte en fonction de l'information de configuration dans le datagramme de statut respectif.

5. Procédé suivant l'une des revendications 1 à 4,
dans lequel les datagrammes (32) de statut sont des trames de données MRP_InLinkChange correspondant à IEC 62439-2, et dans lequel les datagrammes (33) de modification de la topologie sont des trames de données MRP_InTopologyChange correspondant à IEC 62439-2.

6. Procédé suivant la revendication 5,
dans lequel les appareils (101, 201) de communication, ayant une unité (100, 200) de commande d'anneau activée, envoient à la réception de la trame (33) de données MRP_InTopologyChange, une trame (12, 22) de données MRP_InTopologyChange correspondant à IEC 62439-2 aux appareils (101-107, 201-206) de communication au sein de leur réseau (1, 2) partiel respectif, dans lequel la trame de données MRP_InTopologyChange comprend une indication de la durée donnée à l'avance par l'appareil (107) de communication de couplage choisi, et dans lequel les appareils de communication effacent, après écoulement de la durée donnée à l'avance à partir de la réception de la trame de données MRP_InTopologyChange, leur table (111, 121, ..., 171, 211, 221, ..., 271) d'adresse source locale respective.

7. Procédé suivant l'une des revendications 1 à 6,
dans lequel le premier et/ou le deuxième réseaux (1, 2) partiels comprennent chacun plusieurs appareils (101, 106 ; 201, 205) de communication ayant une unité (100, 200) de commande d'anneau pouvant être activée, et dans lequel les appareils de communication, ayant une unité de commande d'anneau pouvant être activée, choisissent, à l'aide d'une caractéristique de priorité, qui leur est affectée respectivement, entre eux pour le réseau partiel respectif, un appareil de communication, dont on active l'unité de commande d'anneau, tandis que les autres appareils de communication désactivent leur unité de commande d'anneau au sein du réseau partiel respectif.

8. Procédé suivant l'une des revendications 1 à 7,
dans lequel une unité (100, 200) de commande d'anneau activée détecte une interruption au sein de la topologie annulaire respective, à l'aide d'un premier datagramme (11, 21) de test envoyé par l'appareil (101, 201) de communication respectif et reçu à nouveau.

9. Procédé suivant la revendication 8,
dans lequel on transmet des datagrammes au sein du premier et du deuxième réseaux partiels conformément à Media Redundancy Protocol.

10. Procédé suivant l'une des revendications 1 à 9,
dans lequel les appareils (106, 205) de communication de couplage, raccordés au chemin (10) de couplage principal, échangent entre eux des deuxièmes datagrammes (31) de test pour la détection de l'apparition d'une perturbation sur le chemin de couplage principal.

11. Procédé suivant l'une des revendications 1 à 10,
dans lequel on fait fonctionner l'appareil de communication de couplage choisi, comme Media Redundancy Interconnection Manager, conformément à l'IEC 61439-2, et dans lequel on fait fonctionner les appareils de communication de couplage raccordés au chemin de couplage principal, respectivement dans le Link Check Modus, conformément à IEC 62439-2.

12. Procédé suivant l'une des revendications 1 à 11,
dans lequel les appareils de communication de couplage choisissent, à l'aide d'une caractéristique de priorité, qui leur est affectée respectivement, entre eux un appareil de communication de couplage, dont on active l'unité de commande de couplage, tandis que les autres appareils de communication de couplage désactivent leur unité de commande de couplage.

13. Appareil de communication de couplage comprenant
- au moins un élément de couplage, ainsi qu'une première et une deuxième bornes d'anneau et une borne de couplage, qui peuvent être reliées entre elles de manière commutable par l'élément de couplage,
- une unité de commande de couplage pouvant être activée, qui est conformée et conçue pour faire fonctionner un chemin de couplage, auquel l'appareil de communication de couplage est raccordé, jusqu'à ce que survienne une perturbation, comme chemin de couplage de réserve inactif, et un autre chemin de couplage, comme chemin de couplage principal actif, pour la transmission de données utiles,
- l'appareil de communication de couplage est **caractérisé en ce qu'**il est conformé et conçu pour détecter, comme appareil de communication de couplage raccordé au chemin de couplage principal, l'apparition d'une perturbation sur le chemin de couplage principal et transmettre des datagrammes de statut à un appareil de communication de couplage choisi, ayant une unité de commande de couplage activée, dans lequel les datagrammes de statut comprennent en plus une information de configuration sur le point de savoir si l'appareil de communication de couplage comprend une unité de commande d'anneau pouvant être activée,
- **en ce qu'**il est conformé et conçu pour activer, pour la transmission de données utiles, le chemin de couplage de réserve, lors de l'apparition sur le chemin de couplage principal d'une perturbation signalée par un datagramme de statut, et envoyer respectivement un datagramme de modification de la topologie, par lequel d'autres appareils de communication provoquent, après l'expiration d'une durée donnée à l'avance, un effacement de leur table d'adresse source respective,
- et **en ce qu'**il est conformé et conçu pour écourter, comme appareil de communication de couplage choisi, la durée donnée à l'avance par rapport à une valeur de référence, si aucun appareil de communication de couplage raccordé au chemin de couplage principal ne comprend une unité de commande d'anneau pouvant être activée.

14. Appareil de communication de couplage suivant la revendication 13,
dans lequel l'appareil de communication de couplage comprend un switch ou un bridge.
